# FASCICULE DE BREVET EUROPEEN

(11) **EP 2 587 748 B1**
(45) Date de publication et mention de la délivrance du brevet: **08.07.2015**
(21) Numéro de dépôt: 12189308.5
(22) Date de dépôt: 19.10.2012
(51) Int. Cl.: H04L 12/58, H04L 29/06, H04L 29/08, H04L 29/12

(54) **Lancement de session sur un serveur de communication**
Starten einer Sitzung auf einem Kommunikationsserver
Launching of a session on a communication server

(30) Priorité: 25.10.2011 FR 1159677
(43) Date de publication de la demande: 01.05.2013
(73) Titulaire: Orange, 75015 Paris (FR)
(72) Inventeur: El Chami, Zaher, 75013 Paris (FR); Despax, Guillaume, 35 510 Cesson Sévigné (FR)
(74) Mandataire: Cabinet Plasseraud

(56) Documents cités:
- US-A1- 2008 171 601
- US-A1- 2011 153 735
- US-B2- 7 970 837

## Description

La présente invention concerne la création de sessions multimédias entre différents utilisateurs.

La création et l'établissement d'une session de jeu incluant une pluralité de joueurs (ou utilisateurs) connectés via un réseau IP s'effectue généralement de manière manuelle, à l'initiative de l'un des utilisateurs, appelé « hôte » ou « maître » (« host » ou « master » en anglais). Cet utilisateur hôte, connecté en ligne à un serveur d'un jeu donné, initie une session de jeu multi-joueurs et lui affecte un identifiant, noté X par la suite. Les utilisateurs, appelés « invités » ou « esclaves » (« invited » ou « slave » en anglais) souhaitant rejoindre la session initiée par l'utilisateur hôte, se connectent en ligne sur le même serveur de jeu, accèdent à un espace dédié aux sessions multi-joueurs et sélectionnent la session X.

Ainsi, lorsque le nombre de session multi-joueurs de l'espace d'un jeu est réduit, le parcours du client est relativement simple, en supposant que l'utilisateur hôte maîtrise la création et l'initiation d'une session multi-joueurs qui peut être différente d'un jeu à l'autre et d'une plateforme de jeu à une autre.

Cependant, lorsque le nombre de sessions multi-joueurs simultanées augmentent, la recherche d'une session donnée devient compliquée. En effet, les joueurs invités doivent chercher la session X parmi un millier de sessions initiées, ce qui ralentit considérablement l'établissement de la session multi-joueurs, d'autant plus que certaines sessions multi-joueurs n'intègrent pas de moteur de recherche permettant d'accéder plus rapidement à la session X.

Par ailleurs, l'utilisateur hôte doit communiquer via des moyens de communication quelconques, un identifiant de la session qu'il a créée, aux utilisateurs invités, afin qu'ils puissent le rejoindre sur la session multi-joueurs. Dans certains cas, l'utilisateur hôte doit en plus créer un code, qui est conditionnel pour l'accès à la session X. Ce code doit donc être également communiqué aux joueurs invités afin qu'ils puissent rejoindre la session X.

Les mêmes limitations apparaissent dans le cadre de la création de sessions de partages, telles que des sessions de partage de photos, vidéos ou de musique par exemple.

La présente invention vient améliorer la situation.

Le document US 2008/171601 constitue l'état de l'art le plus proche. L'invention est définie dans les revendications indépendentes 1, 11, 12 et 13.

Un premier aspect de l'invention concerne à cet effet un procédé de création d'une pluralité de sessions multimédias entre un premier et un second utilisateur, une première session multimédia étant établie entre les premier et second utilisateurs via un premier serveur. Le procédé comprend les étapes suivantes mises en oeuvre par un second serveur :
- recevoir une requête de connexion d'un premier terminal du premier utilisateur comprenant un identifiant du premier utilisateur ;
- transmettre l'identifiant du premier utilisateur au premier serveur afin de requérir au moins un identifiant d'un utilisateur partageant la première session multimédia avec le premier utilisateur via le premier serveur ;
- recevoir du premier serveur au moins un identifiant du second utilisateur ; et
- créer une seconde session multimédia entre le premier terminal du premier utilisateur et un deuxième terminal du second utilisateur via le second serveur.

Ainsi, le procédé selon l'invention permet avantageusement d'initier une pluralité de sessions multimédia, à partir d'une session multimédia initialement en cours entre deux utilisateurs, et ce, de manière transparente pour l'utilisateur. En effet, les identifiants des utilisateurs sont communiqués directement entre deux serveurs sans nécessiter l'intervention des utilisateurs. Par session multimédia, on entend toute session de partage, de communication ou encore de jeu. Les terminaux utilisateurs peuvent être un ordinateur de bureau, un ordinateur portable, un téléphone mobile tel qu'un Smartphone, un PDA (pour « Personal Digital Assistant » en anglais), ou encore une console de jeu permettant un accès à un réseau.

Selon certains modes de réalisation, l'identifiant du second utilisateur est reçu si la première session est active.

Ainsi, avant de transmettre des identifiants d'utilisateurs afin d'ouvrir une deuxième session, le premier serveur peut vérifier un statut de la première session. Par exemple, si l'un des utilisateurs a un statut « occupé », « absent » ou encore « hors ligne » (par exemple lorsque le premier serveur est un serveur de messagerie instantanée), la création de la deuxième session peut être interrompue.

Dans certains modes de réalisation de l'invention, l'étape de création d'une seconde session multimédia entre le premier terminal et le deuxième terminal via le second serveur peut comprendre:
- transmettre l'identifiant du second utilisateur au premier terminal afin de déterminer si le premier utilisateur souhaite établir une session multimédia avec le second utilisateur via le second serveur ;
- créer une seconde session multimédia entre le premier terminal et le deuxième terminal via le second serveur.

La création de la seconde session peut alors être conditionnée par l'acceptation du premier utilisateur d'établir une session multimédia avec le second utilisateur via le second serveur.

Ces modes de réalisation permettent ainsi de conditionner la création de la second session par l'acceptation du premier utilisateur d'établir une nouvelle session avec le second utilisateur. Par exemple, une fenêtre pop-up peut apparaître sur le premier terminal du premier utilisateur lui transmettant l'identifiant du second utilisateur afin de vérifier s'il souhaite ou non établir une seconde session avec cet utilisateur.

Selon certains modes de réalisation, la création de la seconde session multimédia entre le premier terminal et le deuxième terminal via le second serveur peut être conditionnée par la réception par le second serveur d'une requête de connexion du deuxième terminal comprenant un identifiant du second utilisateur.

Ainsi, le premier terminal peut être mis en attente pendant que le deuxième terminal se connecte au deuxième serveur avant d'établir la seconde session.

En complément, sur réception de la requête de connexion du deuxième terminal comprenant un identifiant du second utilisateur, le procédé comprend en outre la transmission de l'identifiant du premier utilisateur au deuxième terminal afin de déterminer si le second utilisateur souhaite établir une session multimédia avec le premier utilisateur via le second serveur et créer une seconde session multimédia entre le premier terminal et le deuxième terminal via le second serveur est conditionné par l'acceptation du second utilisateur d'établir une session multimédia avec le premier utilisateur via le second serveur.

Ainsi, de manière symétrique, le deuxième utilisateur peut également accepter ou refuser l'établissement de la session avec le premier utilisateur. A nouveau, une fenêtre pop-up peut être ouverte sur le deuxième terminal du second utilisateur. En variante, le second utilisateur peut être directement redirigé vers la deuxième session multimédia partagée avec le premier utilisateur.

Selon certains modes de réalisation, le premier serveur est un serveur de téléphonie IP, de vidéoconférence ou de messagerie instantanée. Le second serveur peut quant à lui être une plateforme de jeu en réseau et la seconde session multimédia est ainsi une session de jeu.

Dans certains modes de réalisation, l'identifiant du premier utilisateur et l'identifiant du second utilisateur sont respectivement une adresse IP du premier terminal et une adresse IP du deuxième terminal.

Ainsi, l'identifiant d'un utilisateur peut être obtenue de manière transparente pour l'utilisateur.

En complément, la première session est établie entre un troisième terminal du premier utilisateur et un quatrième terminal du second utilisateur, respectivement. Le troisième terminal et le premier terminal peuvent être connectés à un même réseau local, d'une part, et le quatrième terminal et le deuxième terminal peuvent être connectés à un même réseau local, d'autre part.

En effet, des sessions peuvent ainsi être créées à partir d'une console de jeu, d'un ordinateur portable ou d'un ordinateur de bureau, tous ces terminaux étant reliés à un même réseau local animé par une passerelle ayant une unique adresse IP par exemple.

En variante, la première session peut être établie entre le premier terminal et le deuxième terminal.

Ainsi, plusieurs sessions peuvent être générées à partir d'un seul terminal pour chaque utilisateur. Les utilisateurs peuvent ainsi, à partir de leur ordinateur de bureau par exemple, créer aisément des sessions de partage de photos, tout en discutant via un serveur de messagerie instantanée par exemple.

Un deuxième aspect de l'invention concerne un produit programme d'ordinateur comprenant des instructions de code de programme enregistrés sur un support lisible par un ordinateur, pour l'exécution des étapes du procédé selon des modes de réalisation du premier aspect de l'invention.

Un troisième aspect de l'invention se réfère à un serveur pour la création d'une pluralité de sessions multimédias entre un premier et un second utilisateur. Le serveur comprend :
- une première unité de réception d'une requête de connexion du premier terminal comprenant un identifiant du premier utilisateur ;
- une unité de transmission de l'identifiant du premier utilisateur à un autre serveur afin de requérir au moins un identifiant d'un utilisateur partageant la première session multimédia avec le premier utilisateur via l'autre serveur ;
- une seconde unité de réception d'au moins un identifiant du second utilisateur; et
- une unité de création d'une seconde session multimédia entre le premier terminal du premier utilisateur et un deuxième terminal du second utilisateur via le serveur.

Un quatrième aspect de l'invention concerne un système pour la création d'une pluralité de sessions multimédias entre un premier et un second utilisateur, le système comprenant un premier serveur pour l'établissement d'une première session multimédia entre les premier et second utilisateurs. Le système comprend en outre un second serveur qui comprend :
- une première unité de réception d'une requête de connexion du premier terminal comprenant un identifiant du premier utilisateur ;
- une unité de transmission de l'identifiant du premier utilisateur au premier serveur afin de requérir au moins un identifiant d'un utilisateur partageant la première session multimédia avec le premier utilisateur via le premier serveur ;
- une seconde unité de réception d'au moins un identifiant du second utilisateur ; et
- une unité de création d'une seconde session multimédia entre le premier terminal du premier utilisateur et le deuxième terminal du second utilisateur via le second serveur.
Le premier serveur peut comprendre :
- une unité de réception de l'identifiant du premier utilisateur depuis le second serveur ;
- une unité de détermination d'identifiants d'utilisateurs partageant la première session avec le premier utilisateur via le second serveur ;
- une unité de transmission au second serveur d'au moins un identifiant du second utilisateur.

D'autres particularités et avantages de la présente invention apparaîtront dans la description détaillée ci-après, faite en référence aux dessins annexés sur lesquels :
- la figure 1 présente un système multimédia selon un mode de réalisation de l'invention ;
- la figure 2 est un diagramme d'étapes représentant les échanges entre un premier et un second utilisateur lors de la création de sessions multimédias selon un mode de réalisation de l'invention ;
- la figure 3 présente les étapes d'un procédé selon un mode de réalisation de l'invention ;
- la figure 4 présente deux serveurs multimédias adaptés pour communiquer ensemble, selon certains modes de réalisation de l'invention.

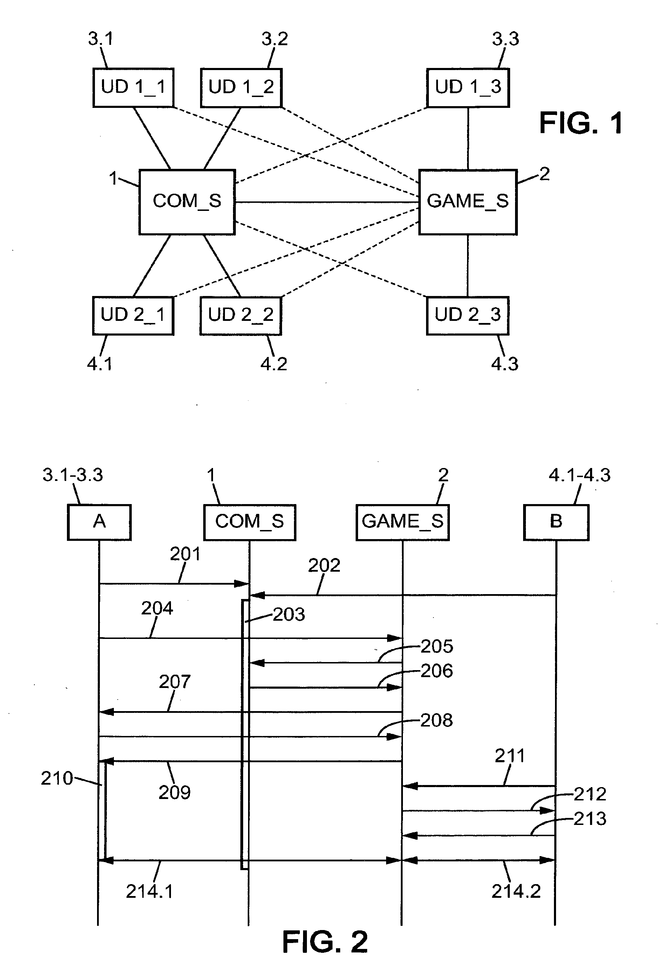

La figure 1 présente un système multimédia selon un mode de réalisation de l'invention. Le système comprend un premier serveur de communication synchrone 1 et un second serveur de communication synchrone 2. Par la suite, il est considéré que le premier serveur 1 peut être par exemple un serveur de VOIP (pour « Voice Over Internet Protocol), un serveur de messagerie instantanée (IM pour « Instant Messaging » en anglais) ou un serveur de visioconférence. Il peut en outre être considéré que le second serveur 2 est par exemple une plateforme de jeu en réseau, accessible via le réseau Internet. Cependant, aucune restriction n'est attachée au premier serveur 1 ou au deuxième serveur 2 au sens de l'invention. Il peut par exemple s'agir en outre d'un serveur de partage de fichiers multimédia tels que des vidéos, des photos ou de la musique

Le premier serveur 1 et le second serveur 2 sont accessibles à un premier utilisateur et à un second utilisateur via des premiers terminaux utilisateurs 3.1, 3.2 et 3.3 et via des seconds terminaux utilisateurs 4.1, 4.2 et 4.3, respectivement.

Par exemple, les premier et second utilisateurs peuvent accéder au premier serveur 1 via un téléphone mobile tel qu'un Smartphone dans le cas où le premier serveur 1 est un serveur de vidéo conférence ou un serveur de messagerie instantanée par exemple. Les premier et second utilisateurs peuvent également accéder au premier serveur 1 via un ordinateur de bureau ou un ordinateur portable sur lesquels sont installées des applications de messagerie instantanée ou de vidéoconférence. Si le premier serveur 1 est un serveur VOIP, les premier et deuxième utilisateurs peuvent également communiquer via un téléphone fixe.

Ainsi, les terminaux utilisateurs 3.1, 3.2, 4.1 et 4.2 peuvent être des téléphones mobiles, des ordinateurs de bureau, des ordinateurs portables ou des téléphones fixes. Aucune restriction n'est attachée au type de terminaux utilisateurs qui sont considérés.

De même, les terminaux utilisateurs 3.3 et 4.3 permettant d'accéder au second serveur 2 (dans le cas où il s'agit d'un serveur de jeu multi-joueurs par exemple), peuvent être des Smartphones, ordinateurs portables ou de bureau, ou encore une console de jeu permettant un accès réseau par exemple.

Il est à noter qu'un terminal utilisateur (ou plusieurs) du premier ou du deuxième utilisateur peut à la fois communiquer avec le premier serveur 1 et avec le second serveur 2 (pointillés sur la figure 1). Par exemple, un ordinateur portable relié au réseau Internet peut à la fois permettre l'installation d'applications de messagerie instantanée (session multimédia sur le premier serveur 1) et l'installation d'un jeu permettant d'établir une session multi-joueurs sur le second serveur 2.

Selon l'invention, un identifiant est associé à chaque utilisateur. Par exemple, il peut s'agir de l'adresse IP associée aux différents terminaux qu'un utilisateur possède, ce qui permet de rendre la transmission d'un identifiant de l'utilisateur transparente car connues des terminaux. En variante, l'identifiant peut être communiqué par un système classique d'identification/authentification. Chacun des terminaux d'un même utilisateur peut ainsi être reconnu par l'identifiant de cet utilisateur.

L'invention sera mieux comprise au vu de la figure 2, qui présente un organigramme d'étapes exécutées par les éléments du système décrit en référence à la figure 1.

En référence à la figure 2, les interactions entre les terminaux 3.1-3.3 du premier utilisateur, les terminaux 4.1-4.3 du second utilisateur, le premier serveur 1 et le second serveur 2 sont considérés. Les terminaux 3.1-3.3 du premier utilisateur sont regroupés sous une même entité, par souci de simplification, ce qui est également le cas des terminaux 4.1-4.3 du second utilisateur. Cependant, comme précédemment expliqué, les différentes sessions peuvent être établies à partir de terminaux différents pour chaque utilisateur.

A une étape 201, le premier utilisateur se connecte au premier serveur 1 via l'un des terminaux 3.1-3.3 (par exemple, le terminal 3.1), qui est un serveur de messagerie instantanée dans la suite de la description. Le terminal 3.1 est identifié auprès du serveur de messagerie instantanée 1 par l'adresse IP du premier utilisateur, qui est commune aux terminaux 3.1, 3.2 et 3.3.

A une étape 202, le second utilisateur se connecte au premier serveur 1, via le terminal 4.2 par exemple. A nouveau, le second utilisateur est identifié auprès du serveur de messagerie instantanée 1 par l'adresse IP du second utilisateur, qui est commune aux terminaux 3.1, 3.2 et 3.3.

A une étape 203, le premier utilisateur et le second utilisateur peuvent engager une conversation via le premier serveur 1.

A une étape 204, le premier utilisateur se connecte au second serveur 2, qui est un serveur de jeu dans la suite de la description, via le terminal 3.3 par exemple. A cet effet, le terminal 3.3 peut envoyer une requête de connexion du premier utilisateur qui comprend un identifiant du premier utilisateur tel que l'adresse IP du premier utilisateur. La connexion peut également être établie en mettant en oeuvre un processus d'identification authentification, dans lequel un identifiant et un mot de passe sont transmis au second serveur 2. Compléter l'identifiant d'un utilisateur par un ensemble identifiant/mot de passe peut permettre d'ouvrir une session multimédia entre deux utilisateurs partageant la même adresse IP. Ainsi, si deux utilisateurs se trouvent dans le même appartement et accèdent au réseau Internet via la même Set Top Box, ils peuvent être différenciés par un ensemble identifiant/ mot de passe.

Le second serveur 2 interroge ensuite le premier serveur 1, à une étape 205, afin de savoir si une session de messagerie instantanée est établie entre le premier utilisateur et un autre utilisateur, via le premier serveur 1. En interrogeant le premier serveur 1, le second serveur 2 transmet en outre l'identifiant du premier utilisateur qui a été reçu dans la requête de connexion. Le premier serveur 1, qui a connaissance des sessions en cours, peut alors constater que la session initiée à l'étape 203 est toujours active, et que cette session est établie entre le premier utilisateur, dont l'identifiant a été reçu, et le deuxième utilisateur, dont l'identifiant est connu du premier serveur 1.

L'identifiant du second utilisateur est ensuite transmis à une étape 206 au second serveur 2. Si, au contraire, personne n'est en communication avec le premier utilisateur, ou bien si un statut de la session de messagerie instantanée ou de l'un des utilisateurs est marqué « occupé », « absent » ou « hors ligne » par exemple, le premier serveur 1 peut signifier au deuxième serveur 2 que le premier utilisateur n'est en communication avec personne via le premier serveur 1. Une session de jeu standard peut alors être initiée sur le second serveur 2.

En outre, le premier utilisateur peut avoir une pluralité de sessions de messagerie instantanée qui sont actives simultanément, avec une pluralité d'utilisateurs. Dans ce cas, le premier serveur 1 peut communiquer au second serveur l'ensemble des identifiants des utilisateurs avec lesquels le premier utilisateur communique via la session de messagerie instantanée. Dans ce qui suit, il est considéré que la session de messagerie instantanée via le premier serveur 1 est toujours active et que seul le second utilisateur partage une session multimédia de messagerie instantanée avec le premier utilisateur via le premier serveur 1.

Une fois que le second serveur 2 a reçu l'identifiant du deuxième utilisateur, il peut envoyer un message d'interrogation au terminal 3.3 du premier utilisateur, à une étape 207, ce message d'interrogation comprenant l'identifiant du second terminal. De plus, le second serveur 2 peut stocker en association les identifiants du premier utilisateur et du second utilisateur dans une mémoire, de manière temporaire par exemple.

Sur réception du message d'interrogation, le terminal 3.3 peut générer une fenêtre pop-up, grâce à laquelle le premier utilisateur est interrogé sur son souhait d'établir ou non, une seconde session avec le second utilisateur via le second serveur 2. Dans le cas où le premier utilisateur ne souhaite pas jouer avec le second utilisateur, le terminal 3.3 renvoie un message de refus au second serveur 2 et le second serveur 2 initie alors une session de jeu standard, dans laquelle le premier utilisateur joue seul. En variante, le second serveur 2 peut proposer d'initier une session multi-joueurs avec des utilisateurs avec lesquels le premier utilisateur n'est actuellement pas en communication via le premier serveur 1.

Dans le cas contraire où le premier utilisateur souhaite créer une session multi-joueurs avec le second utilisateur, le terminal 3.3 envoie un message d'acceptation au second serveur 2 à une étape 208.

Le second serveur initie alors une session de jeu multi-joueurs à une étape 209. Le terminal 3.3 lance une interface de jeu multi-joueurs à une étape 210 afin que le premier utilisateur patiente pendant que le second utilisateur rejoigne la session multi-joueurs.

A une étape 211, le second utilisateur se connecte au second serveur, via le terminal 4.3 par exemple. A cet effet, le terminal 4.3 envoie une requête de connexion au second serveur 2, la requête de connexion comprenant un identifiant du second utilisateur.

Sur réception de la requête de connexion du terminal 4.3, le second serveur 2 détermine si un autre utilisateur a initié une session de jeu à laquelle le second utilisateur a été invité. A cet effet, le second serveur peut consulter la mémoire afin de savoir si un identifiant est associé à l'identifiant du second utilisateur reçu. Dans l'exemple décrit, le premier utilisateur a accepté de créer une session de jeu avec le second utilisateur. Ainsi, le second serveur 2 envoie un message d'interrogation à une étape 212 au terminal 4.3 du second utilisateur.

Sur réception du message d'interrogation, le terminal 4.3 peut générer une fenêtre pop-up, grâce à laquelle le second utilisateur est interrogé sur son souhait de rejoindre ou non, la session multi-joueurs créée par le premier utilisateur. Dans le cas où le second utilisateur refuse de participer à la session de jeu multi-joueurs initiée par le premier utilisateur, un message de refus est envoyé par le terminal 4.3 au second serveur 2 et dans ce cas, une session de jeu standard (mono-joueur) est lancée pour le second utilisateur. Si le second utilisateur est l'unique utilisateur avec qui le premier utilisateur a accepté de créer une deuxième session multimédia, l'interface de jeu multi-joueurs lancée à l'étape 210 est remplacée par une session de jeu standard. En revanche, si d'autres utilisateurs sont en attente d'acceptation ou de refus, l'interface de jeu multi-joueurs lancée à l'étape 210 se poursuit en attendant l'acceptation d'un autre utilisateur.

Dans ce qui suit, il est considéré que le second utilisateur accepte de rejoindre la session de jeu multi-joueurs initiée par le premier utilisateur. Un message d'acceptation est alors envoyé à une étape 213 par le terminal 4.3 au second serveur 2.

La session de jeu multi-joueurs est alors lancée par le second serveur 2. Les terminaux 3.3 et 4.3 communiquent alors via le second serveur durant des étapes 214.1 et 214.2 respectivement.

Aucune restriction n'est attachée à l'ordre dans lequel les étapes dépendant du premier utilisateur et celles dépendant du second utilisateur se succèdent. En effet, le terminal 4.3 du second utilisateur peut envoyer la requête de connexion de l'étape 211 à n'importe quel moment (lorsque le second utilisateur le souhaite). Si cette requête est envoyée avant la requête de connexion du premier utilisateur (avant l'étape 204), ou pendant la création de la session multi-joueurs par le premier utilisateur, alors le second utilisateur peut également initier une session de jeu multi-joueurs Ainsi, le premier utilisateur et le deuxième utilisateur peuvent possiblement créer chacun une session multi-joueurs de manière simultanée. Lorsque l'une des sessions est créée, la création de la seconde peut être interrompue afin d'envoyer le message d'interrogation de l'étape 212 à l'utilisateur n'ayant pas fini de créer la session multi-joueurs, par exemple.

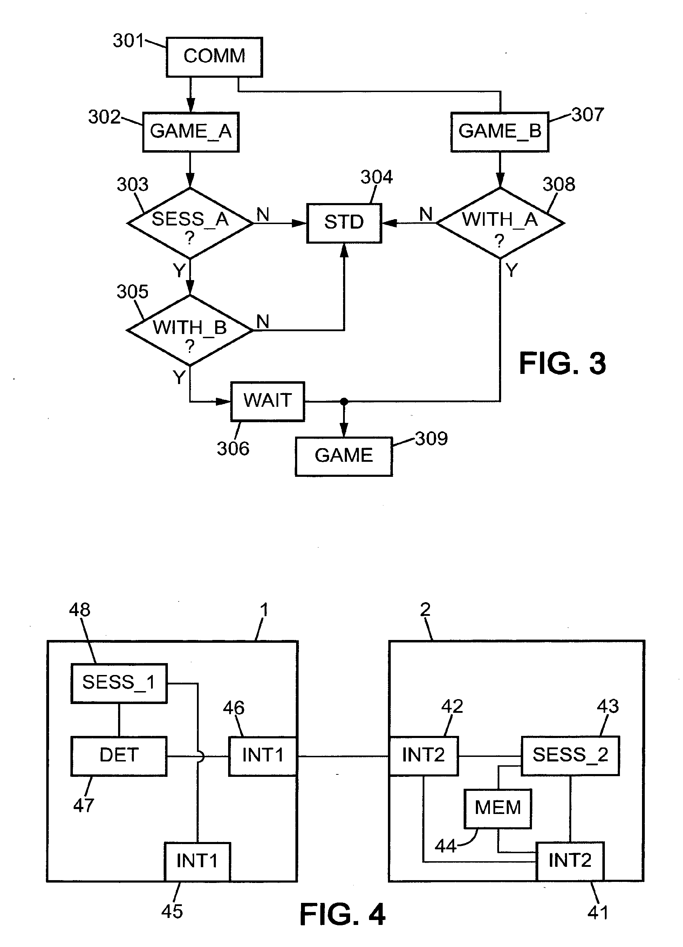

La Figure 3 présente les étapes d'un procédé selon un mode de réalisation de l'invention.

A une étape 301, le premier utilisateur et le second utilisateur sont initialement en communication via une session multimédia sur le premier serveur 1.

A une étape 302, le premier utilisateur se connecte au second serveur 2 par envoi par le terminal 3.3 d'une requête de connexion au second serveur 2, comme précédemment expliqué.

A une étape 303, le second serveur 2 interroge le premier serveur 1 afin de déterminer si une session multimédia est établie entre le premier utilisateur et un autre utilisateur, par envoi de l'identifiant du premier utilisateur reçu dans la requête de connexion. Si le premier utilisateur n'a aucune session multimédia en cours via le premier serveur 1 (ou si le statut de la session ou de l'utilisateur est « occupé », « hors ligne » ou « absent » par exemple), une session de jeu standard peut être initiée par le second serveur 2 à une étape 304.

A une étape 305, le premier utilisateur, sur réception du message d'interrogation précédemment décrit, peut choisir ou non d'initier une session de jeu multi-joueurs avec le second utilisateur à partir d'une fenêtre pop-up affichée sur le terminal 3.3. Si le premier utilisateur refuse, une session de jeu standard peut être initiée à l'étape 304. Si le premier utilisateur accepte, il est mis en attente à une étape 306 pendant laquelle une interface de jeu multi-joueurs peut être affichée sur le terminal 3.3 du premier utilisateur.

A une étape 307, le terminal 4.3 du second utilisateur envoie une requête de connexion au second serveur 2, la requête de connexion comprenant l'identifiant du second utilisateur. Comme précédemment expliqué, l'étape 307 n'est pas nécessairement ultérieure aux étapes 302 à 306 qui s'appliquent au premier utilisateur.

Le second serveur 2 propose alors de lancer une session de jeu multi-joueurs, entre au moins le premier utilisateur et le second utilisateur, dont les identifiants ont été associés dans une mémoire interne au second serveur, par envoi d'un message d'interrogation à une étape 308 au terminal 4.3 du second utilisateur. Dans le cas où le second utilisateur, lorsque la fenêtre pop-up affichée sur le terminal 4.3 lui suggère une session de jeu multi-joueurs avec le premier utilisateur, refuse de rejoindre la session multi-joueurs, une session de jeu standard peut être initiée par le second serveur 2 à une étape 304.

Dans le cas où le second utilisateur accepte la session de jeu multi-joueurs avec le premier utilisateur, la session de jeu multi-joueurs est alors lancée par le second serveur 2 à une étape 309.

La figure 4 présente la structure des serveurs 1 et 2 introduits précédemment en référence aux figures précédentes, selon certains modes de réalisation de l'invention.

Le second serveur 2 comprend une première interface de communication 41 avec des terminaux utilisateurs, dont notamment les terminaux 3.1 à 3.3 et 4.1 à 4.3 du premier utilisateur et de second utilisateur, respectivement. L'interface de communication 41 comprend à la fois une première unité de réception pour la réception de requêtes de connexion, une unité de transmission de messages d'interrogation et une unité de réception de messages de refus ou d'acceptation tels que précédemment introduits. Le second serveur comprend en outre une deuxième interface de communication 42 avec d'autres serveurs, tel que le premier serveur 1 par exemple. La seconde interface de communication comprend une unité de transmission d'identifiants d'utilisateur afin de requérir au moins un identifiant d'un autre utilisateur partageant une session avec l'utilisateur ou les utilisateurs dont les identifiants ont été transmis et une unité de réception des identifiants requis.

Afin de stocker en association les identifiants des utilisateurs qui partagent une même session via d'autres serveurs, le second serveur comprend en outre une mémoire 44.

Le second serveur 2 comprend une unité de création 43 permettant la création de sessions de jeu multi-joueurs à partir d'identifiants d'utilisateurs stockés en association dans la mémoire 44.

Le premier serveur 1 comprend une unité de communication 45 avec des terminaux utilisateurs, tels que les terminaux 3.1 à 3.3 et 4.1 à 4.3 par exemple. L'unité de communication 45 du premier serveur 1 peut être semblable à l'unité de communication 41 du second serveur 2. L'unité de communication 45 est reliée à une unité de gestion 48 de sessions entre utilisateurs via le premier serveur 1. Le premier serveur 1 comprend une interface de communication 46 avec d'autres serveurs, et notamment avec le second serveur 2. L'interface de communication 46 comprend une unité de réception d'identifiants d'utilisateurs et une unité de transmission d'identifiants d'autres utilisateurs qui partagent une session multimédia avec les utilisateurs dont les identifiants ont été précédemment reçus. Afin de déterminer les associations entre les utilisateurs qui partagent une même session via le premier serveur 1, le premier serveur comprend en outre une unité de détermination 47 permettant de déterminer, à partir de l'identifiant d'un utilisateur, les identifiants d'autres utilisateurs dont une session multimédia est en cours avec l'utilisateur identifié via le premier serveur 1.

Dans les exemples précédents, deux serveurs ont été considérés, par souci de simplification. Cependant, l'invention peut être mise en oeuvre de manière similaire entre un nombre plus important de serveurs, qui peuvent s'interroger mutuellement afin de requérir et de fournir des identifiants d'utilisateurs en communication avec d'autres utilisateurs.

La présente invention permet ainsi de simplifier le parcours d'un utilisateur pour la création de session multimédias en le rendant intuitif et transparent à l'utilisateur. Elle permet ainsi d'éviter de requérir de la part de l'utilisateur hôte l'affectation d'un code à une session multimédia, code qu'il devra ensuite communiquer à d'autres utilisateur afin qu'ils puissent rejoindre la session multimédia. Dans la mesure où la présente invention prévoit en outre une redirection automatique des autres utilisateurs vers la session multimédia créée, le parcours des utilisateurs qui rejoignent la session multimédia est également simplifié.

## Revendications

1. Procédé de création d'une pluralité de sessions multimédias entre un premier utilisateur et un second utilisateur, une première session multimédia étant établie entre lesdits premier et second utilisateurs via un premier serveur (1), tel que le procédé comprend les étapes suivantes mises en oeuvre par un second serveur (2):
- recevoir une requête de connexion d'un premier terminal (3.1-3.3) du premier utilisateur comprenant un identifiant du premier utilisateur ;
- transmettre ledit identifiant du premier utilisateur au premier serveur afin de requérir au moins un identifiant d'un utilisateur partageant la première session multimédia avec le premier utilisateur via le premier serveur ;
- recevoir du premier serveur au moins un identifiant dudit second utilisateur ; et
- créer une seconde session multimédia entre le premier terminal du premier utilisateur et un deuxième terminal (4.1-4.3) du second utilisateur via le second serveur.

2. Procédé selon la revendication 1, dans lequel l'identifiant du second utilisateur est reçu si la première session est active.

3. Procédé selon l'une des revendications 1 ou 2, dans lequel l'étape de création d'une seconde session multimédia entre le premier terminal (3.1-3.3) et le deuxième terminal (4.1-4.3) via le second serveur (2) comprend:
- transmettre l'identifiant du second utilisateur au premier terminal afin de déterminer si le premier utilisateur souhaite établir une session multimédia avec le second utilisateur via le second serveur ;
- créer une seconde session multimédia entre le premier terminal et le deuxième terminal via le second serveur,
ladite création étant conditionnée par l'acceptation du premier utilisateur d'établir une session multimédia avec le second utilisateur via le second serveur.

4. Procédé selon l'une des revendications 1 à 3, dans lequel la création de la seconde session multimédia entre le premier terminal (3.1-3.3) et le deuxième terminal (4.1-4.3) via le second serveur (2) est conditionnée par la réception par le second serveur d'une requête de connexion du deuxième terminal comprenant un identifiant du second utilisateur.

5. Procédé selon la revendication 4, dans lequel, sur réception de la requête de connexion du deuxième terminal (4.1-4.3) comprenant un identifiant du second utilisateur, le procédé comprend en outre la transmission de l'identifiant du premier utilisateur au deuxième terminal afin de déterminer si le second utilisateur souhaite établir une session multimédia avec le premier utilisateur via le second serveur (2) et dans lequel créer une seconde session multimédia entre le premier terminal (3.1-3.3) et le deuxième terminal via le second serveur est conditionné par l'acceptation du second utilisateur d'établir une session multimédia avec le premier utilisateur via le second serveur.

6. Procédé selon l'une des revendications précédentes, dans lequel le premier serveur (1) est un serveur de téléphonie IP, de vidéoconférence ou de messagerie instantanée.

7. Procédé selon l'une des revendications précédentes, dans lequel le second serveur (2) est une plateforme de jeu en réseau et dans lequel la seconde session multimédia est une session de jeu.

8. Procédé selon l'une quelconque des revendications précédentes, dans lequel l'identifiant du premier utilisateur et l'identifiant du second utilisateur sont respectivement une adresse IP du premier terminal (3.1-3.3) et une adresse IP du deuxième terminal (4.1-4.3).

9. Procédé selon la revendication 8, dans lequel la première session est établie entre un troisième terminal (3.1-3.3) du premier utilisateur et un quatrième terminal (4.1-4.3) du second utilisateur, respectivement, dans lequel le troisième terminal et le premier terminal (3.1-3.3), d'une part, sont reliés à un même réseau local, et dans lequel le quatrième terminal (4.1-4.3) et le deuxième terminal, d'autre part, sont reliés à un même réseau local.

10. Procédé selon la revendication 8, dans lequel la première session est établie entre le premier terminal (3.1-3.3) et le deuxième terminal (4.1-4.3).

11. Produit programme d'ordinateur comprenant des instructions de code de programme enregistrés sur un support lisible par un ordinateur, pour l'exécution des étapes du procédé selon l'une quelconque des revendications 1 à 10, losrque le programme est mis en oeuvre par l'ordinateur.

12. Serveur de création de session multimédia entre un premier utilisateur et un second utilisateur, tel que le serveur (2) comprend :
- une première unité de réception (41) d'une requête de connexion d'un premier terminal du premier utilisateur comprenant un identifiant du premier utilisateur ;
- une unité de transmission (42) dudit identifiant du premier utilisateur à un autre serveur afin de requérir au moins un identifiant d'un utilisateur partageant une première session multimédia avec le premier utilisateur via ledit autre serveur ;
- une seconde unité de réception (42) d'au moins un identifiant dudit second utilisateur depuis ledit autre serveur; et
- une unité de création (43) d'une seconde session multimédia entre le premier terminal du premier utilisateur et un deuxième terminal du second utilisateur via ledit serveur.

13. Système de création d'une pluralité de sessions multimédias entre un premier utilisateur et un second utilisateur, ledit système comprenant un premier serveur (1) pour l'établissement d'une première session multimédia entre lesdits premier et second utilisateurs, tel **que** ledit système comprend en outre un second serveur (2), ledit second serveur comprenant :
- une première unité de réception (41) d'une requête de connexion d'un premier terminal du premier utilisateur comprenant un identifiant du premier utilisateur ;
- une unité de transmission (42) dudit identifiant du premier utilisateur au premier serveur afin de requérir au moins un identifiant d'un utilisateur partageant la première session multimédia avec le premier utilisateur via le premier serveur ;
- une seconde unité de réception (42) d'au moins un identifiant dudit second utilisateur depuis ledit premier serveur, et
- une unité de création (43) d'une seconde session multimédia entre le premier terminal du premier utilisateur et un deuxième terminal du second utilisateur via le second serveur ;
et **en ce que** le premier serveur comprend :
- une unité de réception (46) de l'identifiant du premier utilisateur depuis ledit second serveur ;
- une unité de détermination (47) d'identifiants d'utilisateurs partageant la première session avec le premier utilisateur via le second serveur ;
- une unité de transmission (46) au second serveur dudit au moins un identifiant du second utilisateur.

## Patentansprüche

1. Verfahren zur Erstellung einer Vielzahl von Multimediasitzungen zwischen einem ersten Benutzer und einem zweiten Benutzer, wobei eine erste Multimediasitzung zwischen dem ersten und zweiten Benutzer über einen ersten Server (1) erstellt wird, wobei das Verfahren die folgenden Schritte umfasst, die von einem zweiten Server (2) durchgeführt werden:
- Empfang einer Anschlussanfrage von einem ersten Terminal (3.1-3.3) des ersten Benutzers, umfassend einen Identifikator des ersten Benutzers;
- Übertragung des Identifikators des ersten Benutzers an den ersten Server, um mindestens einen Identifikator eines Benutzers zu erfassen, der die erste Multimediasitzung mit dem ersten Benutzer über den ersten Server teilt;
- Empfang vom ersten Server mindestens eines Identifikators des zweiten Benutzers; und
- Erstellung einer zweiten Multimediasitzung zwischen dem ersten Terminal des ersten Benutzers und einem zweiten Terminal (4.1-4.3) des zweiten Benutzers über den zweiten Server.

2. Verfahren nach Anspruch 1, bei dem der Identifikator des zweiten Benutzers empfangen wird, wenn die erste Sitzung aktiv ist.

3. Verfahren nach einem der Ansprüche 1 oder 2, bei dem der Schritt der Erstellung einer zweiten Multimediasitzung zwischen dem ersten Terminal (3.1-3.3) und dem zweiten Terminal (4.1-4.3) über den zweiten Server (2) umfasst:
- Übertragung des Identifikators des zweiten Benutzers an das erste Terminal, um zu bestimmen, ob der erste Benutzer eine Multimediasitzung mit dem zweiten Benutzer über den zweiten Server erstellen möchte;
- Erstellen einer zweiten Multimediasitzung zwischen dem ersten Terminal und dem zweiten Terminal über den zweiten Server,
wobei die Erstellung durch die Akzeptanz des ersten Benutzers, eine Multimediasitzung mit dem zweiten Benutzer über den zweiten Server zu erstellen, bedingt ist.

4. Verfahren nach einem der Ansprüche 1 bis 3, bei dem die Erstellung der zweiten Multimediasitzung zwischen dem ersten Terminal (3.1-3.3) und dem zweiten Terminal (4.1-4.3) über den zweiten Server (2) durch den Empfang durch den zweiten Server einer Anschlussanfrage des zweiten Terminals, umfassend einen Identifikator des zweiten Benutzers, bedingt ist.

5. Verfahren nach Anspruch 4, bei dem bei Empfang der Anschlussanfrage des zweiten Terminals (4.1-4.3), umfassend einen Identifikator des zweiten Benutzers, das Verfahren ferner die Übertragung des Identifikators des ersten Benutzers an das zweite Terminal umfasst, um zu bestimmen, ob der zweite Benutzer eine Multimediasitzung mit dem ersten Benutzer über den zweiten Server (2) erstellen möchte, und bei dem die Erstellung einer zweiten Multimediasitzung zwischen dem ersten Terminal (3.1-3.3) und dem zweiten Terminal über den zweiten Server durch die Akzeptanz des zweiten Benutzers, eine Multimediasitzung mit dem ersten Benutzer über den zweiten Server zu erstellen, bedingt ist.

6. Verfahren nach einem der vorhergehenden Ansprüche, bei dem der erste Server (1) ein Telefonserver IP, ein Videokonferenzserver oder ein Instant Messaging-Server ist.

7. Verfahren nach einem der vorhergehenden Ansprüche, bei dem der zweite Server (2) eine Spieleplattform im Netz und bei dem die zweite Multimediasitzung eine Spielesitzung ist.

8. Verfahren nach einem der vorhergehenden Ansprüche, bei dem der Identifikator des ersten Benutzers und der Identifikator des zweiten Benutzers eine IP-Adresse des ersten Terminals (3.1-3.3) bzw. eine IP-Adresse des zweiten Terminals (4.1-4.3) sind.

9. Verfahren nach Anspruch 8, bei dem die erste Sitzung zwischen einem dritten Terminal (3.1-3.3) des ersten Benutzers bzw. einem vierten Terminal (4.1-4.3) des zweiten Benutzers erstellt wird, wobei das dritte Terminal und das erste Terminal (3.1-3.3) einerseits mit einem selben lokalen Netzwerk verbunden sind, und das vierte Terminal (4.1-4.3) und das zweite Terminal andererseits mit einem selben lokalen Netzwerk verbunden sind.

10. Verfahren nach Anspruch 8, bei dem die erste Sitzung zwischen dem ersten Terminal (3.1-3.3) und dem zweiten Terminal (4.1-4.3) erstellt wird.

11. Computerprogrammprodukt, umfassend Programmcodeinstruktionen, die auf einem von einem Computer lesbaren Träger aufgezeichnet sind, für die Ausführung der Schritte des Verfahrens nach einem der Ansprüche 1 bis 10, wenn das Programm vom Computer durchgeführt wird.

12. Server zur Erstellung einer Multimediasitzung zwischen einem ersten Benutzer und einem zweiten Benutzer, wobei der Server (2) umfasst:
- eine erste Empfangseinheit (41) einer Anschlussanfrage von einem ersten Terminal des ersten Benutzers, umfassend einen Identifikator des ersten Benutzers;
- eine Übertragungseinheit (42) des Identifikators des ersten Benutzers zu einem anderen Server, um mindestens einen Identifikator eines Benutzers, der eine erste Multimediasitzung mit dem ersten Benutzer teilt, über den anderen Server zu erfassen;
- eine zweite Empfangseinheit (42) mindestens eines Identifikators des zweiten Benutzers von dem anderen Server; und
- eine Einheit (43) zur Erstellung einer zweiten Multimediasitzung zwischen dem ersten Terminal des ersten Benutzers und einem zweiten Terminal des zweiten Benutzers über den Server.

13. System zur Erstellung einer Vielzahl von Multimediasitzungen zwischen einem ersten Benutzer und einem zweiten Benutzer, wobei das System einen ersten Server (1) für die Erstellung einer ersten Multimediasitzung zwischen dem ersten und dem zweiten Benutzer umfasst, wobei das System ferner einen zweiten Server (2) umfasst, wobei dieser zweite Server umfasst:
- eine erste Empfangseinheit (41) einer Anschlussanfrage von einem ersten Terminal des ersten Benutzers, umfassend einen Identifikator des ersten Benutzers;
- eine Übertragungseinheit (42) des Identifikators des ersten Benutzers zu dem ersten Server, um mindestens einen Identifikator eines Benutzers, der die erste Multimediasitzung mit dem ersten Benutzer teilt, über den ersten Server zu erfassen;
- eine zweite Empfangseinheit (42) mindestens eines Identifikators des zweiten Benutzers von dem ersten Server; und
- eine Einheit (43) zur Erstellung einer zweiten Multimediasitzung zwischen dem ersten Terminal des ersten Benutzers und einem zweiten Terminal des zweiten Benutzers über den zweiten Server;
und wobei der erste Server umfasst:
- eine Empfangseinheit (46) des Identifikators des ersten Benutzers vom zweiten Server;
- eine Einheit (47) zur Bestimmung von Identifikatoren von Benutzern, die die erste Sitzung mit dem ersten Benutzer teilen, über den zweiten Server;
- eine Übertragungseinheit (46) des mindestens einen Identifikators des zweiten Benutzers an den zweiten Server.

## Claims

1. Method for creating a plurality of multimedia sessions between a first user and a second user, a first multimedia session being set up between said first and second users via a first server (1), such that the method comprises the following steps implemented by a second server (2):
- receiving a connection request from a first terminal (3.1-3.3) of the first user comprising an identifier of the first user;
- transmitting said identifier of the first user to the first server in order to request at least one identifier of a user sharing the first multimedia session with the first user via the first server;
- receiving from the first server at least one identifier of said second user; and
- creating a second multimedia session between the first terminal of the first user and a second terminal (4.1-4.3) of the second user via the second server.

2. Method according to Claim 1, in which the identifier of the second user is received if the first session is active.

3. Method according to either of Claims 1 and 2, in which the step of creation of a second multimedia session between the first terminal (3.1-3.3) and the second terminal (4.1-4.3) via the second server (2) comprises:
- transmitting the identifier of the second user to the first terminal in order to determine whether the first user wants to set up a multimedia session with the second user via the second server;
- creating a second multimedia session between the first terminal and the second terminal via the second server,
said creation being conditional on the acceptance of the first user to set up a multimedia session with the second user via the second server.

4. Method according to one of Claims 1 to 3, in which the creation of the second multimedia session between the first terminal (3.1-3.3) and the second terminal (4.1-4.3) via the second server (2) is conditional on the reception by the second server of a connection request from the second terminal comprising an identifier of the second user.

5. Method according to Claim 4, in which, on reception of the connection request from the second terminal (4.1-4.3) comprising an identifier of the second user, the method also comprises the transmission of the identifier of the first user to the second terminal in order to determine whether the second user wants to set up a multimedia session with the first user via the second server (2) and in which creating a second multimedia session between the first terminal (3.1-3.3) and the second terminal via the second server is conditional on the acceptance of the second user to set up a multimedia session with the first user via the second server.

6. Method according to one of the preceding claims, in which the first server (1) is an IP telephony, videoconferencing or instant messaging server.

7. Method according to one of the preceding claims, in which the second server (2) is a networked game platform and in which the second multimedia session is a game session.

8. Method according to one of the preceding claims, in which the identifier of the first user and the identifier of the second user are respectively an IP address of the first terminal (3.1-3.3) and an IP address of the second terminal (4.1-4.3).

9. Method according to Claim 8, in which the first session is set up between a third terminal (3.1-3.3) of the first user and a fourth terminal (4.1-4.3) of the second user, respectively, in which the third terminal and the first terminal (3.1-3.3), on the one hand, are linked to one and the same local area network, and in which the fourth terminal (4.1-4.3) and the second terminal, on the other hand, are linked to one and the same local area network.

10. Method according to Claim 8, in which the first session is set up between the first terminal (3.1-3.3) and the second terminal (4.1-4.3).

11. Computer program product comprising program code instructions stored on a computer-readable medium, for executing the steps of the method according to any one of Claims 1 to 10, when the program is implemented by the computer.

12. Server for creating a multimedia session between a first user and a second user, such that the server (2) comprises:
- a first unit (41) for receiving a connection request from a first terminal of the first user comprising an identifier of the first user;
- a unit (42) for transmitting said identifier of the first user to another server in order to request at least one identifier of a user sharing the first multimedia session with the first user via said other server;
- a second unit (42) for receiving from said other server at least one identifier of said second user; and
- a unit (43) for creating a second multimedia session between the first terminal of the first user and a second terminal of the second user via said server.

13. System for creating a plurality of multimedia sessions between a first user and a second user, said system comprising a first server (1) for setting up a first multimedia session between said first and second users, such that said system also comprises a second server (2), said second server comprising:
- a first unit (41) for receiving from the first user a connection request from the first terminal comprising an identifier of the first user;
- a unit (42) for transmitting said identifier of the first user to the first server in order to request at least one identifier of a user sharing the first multimedia session with the first user via the first server;
- a second unit (42) for receiving from said first server at least one identifier of said second user; and
- a unit (43) for creating a second multimedia session between the first terminal of the first user and a second terminal of the second user via the second server;
and wherein the first server comprises:
- a unit (46) for receiving the identifier of the first user from said second server;
- a unit (47) for determining identifiers of users sharing the first session with the first user via the second server;
- a unit (46) for transmitting to the second server said at least one identifier of the second user.
